# EUROPÄISCHE PATENTANMELDUNG

(11) **EP 3 429 063 A1**
(43) Veröffentlichungstag der Anmeldung: **16.01.2019**
(21) Anmeldenummer: 17181420.5
(22) Anmeldetag: 14.07.2017
(51) Int. Cl.: H02K 3/12, H02K 3/28

(54) **STÄNDER-EINSCHICHTWICKLUNG FÜR ELEKTRISCHE MASCHINEN**

(71) Anmelder: Siemens Aktiengesellschaft, 80333 München (DE)
(72) Erfinder: Sabelfeld, Ilja, 10119 Berlin (DE)

(57) **Zusammenfassung**

Vorgeschlagen wird eine Spule (1) für ein Wicklungssystem (2) eines Ständers (3) einer elektrischen Maschine mit einem ersten Nutabschnitt (4a) und einem zweiten Nutabschnitt (4b), der vorzugsweise zu dem ersten Nutabschnitt (4b) parallel ausgerichtet ist, und zwei Wickelkopfabschnitten (5a, 5b), wobei der erste Nutabschnitt (4a) und der zweite Nutabschnitt (4b) an gegenüberliegenden Stirnseiten (6a, 6b) der jeweiligen Spule (1) mittels des jeweiligen Wickelkopfabschnitts (5a, 5b) miteinander verbunden sind, wobei die Spule (1) eine erste Wicklungsebene (E1) und eine zweite Wicklungsebene (E2) aufweist, die im Wesentlichen parallel zueinander angeordnet sind, die dadurch gekennzeichnet ist, dass die Spule (1) in einem jeweiligen Übergangsbereich (7a, 7b) zwischen dem ersten Nutabschnitt (4a) und den beiden Wickelkopfabschnitten (5a, 5b) jeweils eine doppelte Kröpfung (8a, 8b) aufweist.

## Beschreibung

Die Erfindung betrifft eine Spule für ein Wicklungssystem eines Ständers einer elektrischen Maschine nach Anspruch 1. Eine solche Spule umfasst einen ersten Nutabschnitt und einen zweiten Nutabschnitt, der vorzugsweise zu dem ersten Nutabschnitt parallel ausgerichtet ist. Außerdem umfasst die Spule zwei Wickelkopfabschnitte, wobei der erste Nutabschnitt und der zweite Nutabschnitt an gegenüberliegenden Stirnseiten der jeweiligen Spule mittels des jeweiligen Wickelkopfabschnitts miteinander verbunden sind. Die Spule weist eine erste und eine zweite Wicklungsebene auf, die im Wesentlichen parallel zueinander angeordnet sind.

Außerdem betrifft die Erfindung ein dazugehöriges Wicklungssystem für einen Ständer einer elektrischen Maschine nach Anspruch 7, einen Ständer für eine elektrische Maschine nach Anspruch 10, eine elektrische Maschine nach Anspruch 12 und ein Verfahren zur Herstellung der Spule gemäß Anspruch 13.

Bei der Ausführung einer Spulenwicklung eines Ständers einer elektrischen Maschine unterscheidet man zwischen einer Einschicht- und einer Zweischichtwicklung. Bei der Einschichtwicklung liegt jeweils ein Nutabschnitt einer Spule in einer Nut des Ständers, bei der Zweischichtwicklung zwei.

Ein Statorsegment für einen hohlzylinderförmigen, segmentieren Stator mit einer Zweischichtwicklung ist beispielsweise aus der EP 3 035 500 A1 bekannt. Eine segmentierte Baugruppe (Stator oder Rotor) mit Zweischichtwicklung zeigt auch die DE 10 2010 037 588 A1.

Die Einschichtwicklung weist gegenüber der Zweischichtwicklung den Vorteil auf, dass das Wicklungssystem segmentiert werden kann. Aus diesem Grund werden Ständerwicklungen bei Maschinen großer Bauart vorzugsweise in den Fällen als Einschichtwicklung ausgeführt, in denen das Ständerblechpaket aus Technologie- und Platzgründen segmentiert werden muss, wie es beispielsweise beim Transport und der Montage von Generatoren für Windkraftanlagen der Fall ist.

Ein Nachteil von Einschichtwicklungen besteht jedoch darin, dass ein Anteil des Wicklungskupfers aus konstruktiven Gründen in den Wickelkopfabschnitten der Spulen größer ist als bei der Zweischichtwicklung. Dies führt zu höheren Kupferverlusten im Ständer und senkt den Wirkungsgrad der elektrischen Maschine.

Ein weiterer Nachteil besteht darin, dass beim Einsatz von bisher bekannten Einschichtwicklungssystemen ungleichartige Spulenformen notwendig sind, um die Kupferleiter in den Wickelkopfabschnitten aneinander vorbeiführen zu können. Zweischichtwicklungen werden hingegen standardmäßig mit gleichartigen Spulen (Gleichspulen) ausgeführt.

Eine Anzahl der bei segmentierter Einschichtwicklung benötigten unterschiedlichen Spulenformen ergibt sich aus dem Produkt der Lochzahl und der Strangzahl des Einschichtwicklungssystems. Die Lochzahl ergibt sich dabei aus der Anzahl von Nuten im Ständer des Einschichtwicklungssystems je Pol und je Strang. Bei einer Lochzahl von drei wären beispielsweise neun unterschiedliche Spulenformen notwendig. Dabei stellen unterschiedliche Spulenformen einen erheblichen Fertigungsaufwand dar. Aus diesem Grund wurden Einschichtwicklungssysteme nur mit verhältnismäßig kleinen Lochzahlen, regelmäßig gleich eins, verwendet, was deren Anwendungsspektrum aber erheblich einschränkt.

Der Erfindung liegt die Aufgabe zugrunde, ein Einschichtwicklungssystem für eine elektrische Maschine anzugeben, dessen Mehrzahl an Spulen gleichartig ausgebildet ist und das für eine beliebig große Lochzahl verwendet werden kann.

Diese Aufgabe wird gelöst durch eine Spule mit den Merkmalen des Anspruchs 1, durch ein Wicklungssystem gemäß Anspruch 7, durch einen Ständer für eine elektrische Maschine gemäß Anspruch 10, durch eine elektrische Maschine gemäß Anspruch 12 und durch ein Verfahren zur Herstellung der Spule gemäß Anspruch 13. Vorteilhafte Weiterbildungen ergeben sich aus den abhängigen Ansprüchen.

Bei einer Spule für ein Wicklungssystem eines Ständers einer elektrischen Maschine der eingangs beschriebenen Art wird die Aufgabe erfindungsgemäß dadurch gelöst, dass die Spule in einem jeweiligen Übergangsbereich zwischen dem ersten Nutabschnitt und den beiden Wickelkopfabschnitten jeweils eine doppelte Kröpfung aufweist. Unter Kröpfung ist eine Krümmung des Nutabschnitts mit einem bestimmten Krümmungsradius und einem bestimmten Krümmungswinkel zu verstehen. Unter einer doppelten Kröpfung ist eine Krümmung des ersten Nutabschnitts mit einem ersten Krümmungswinkel bzw. Krümmungsradius und mit einem zweiten Krümmungswinkel bzw. Krümmungsradius zu verstehen.

Der erste Krümmungsradius und der zweite Krümmungsradius können betragsmäßig gleich oder verschieden sein. Der erste Krümmungswinkel und der zweite Krümmungswinkel weisen bezogen auf den ersten Nutabschnitt verschiedene Vorzeichen auf. Beispielsweise kann der erste Krümmungswinkel +45 Grad und der zweite Krümmungswinkel -45 Grad betragen.

Durch die jeweilige doppelte Kröpfung in dem Übergangsbereich zwischen erstem Nutabschnitt und den beiden Wickelkopfabschnitten lässt sich die Spule mit minimalem Bedarf an Bauraum kollisionsfrei neben anderen Spulen anordnen, um ein Wicklungssystem zu bilden. Alle am Umfang nebeneinander angeordneten Spulen sind dabei gleichartig ausgebildet. Aufgrund des geringen benötigten Bauraums und des durch die Gleichartigkeit der Spulen bedingten geringen Herstellungsaufwands kann die Lochzahl des Wicklungssystems beliebig groß gewählt werden.

Vorteilhafterweise liegen sowohl der erste Nutabschnitt als auch der zweite Nutabschnitt in der ersten Wicklungsebene, während der erste Wickelkopfabschnitt und der zweite Wickelkopfabschnitt wenigstens teilweise in der zweiten Wicklungsebene liegen. Durch diese Anordnung der einzelnen Abschnitte in zwei parallel bzw. koaxial zueinander angeordneten Ebenen lässt sich die Spule besonders einfach und effektiv neben weiteren, gleichartigen Spulen anordnen, so dass der Bedarf an Bauraum weiter reduziert werden kann.

Die beiden doppelten Kröpfungen der Spule weisen bevorzugt jeweils einen ersten Winkel von -90 Grad und einen zweiten Winkel von +90 Grad, bezogen auf eine Normale der ersten Wicklungsebene, auf. Aufgrund der derart ausgebildeten doppelten Kröpfung sind der erste Nutabschnitt und die beiden Wickelkopfabschnitte in dem jeweiligen Übergangsbereich parallel bzw. koaxial zueinander angeordnet, wobei der erste Nutabschnitt (und der zweite Nutabschnitt) in der ersten Wicklungsebene verläuft und die beiden Wickelkopfabschnitte wenigstens in dem Übergangsbereich zwischen dem ersten Nutabschnitt und dem jeweiligen Wickelkopfabschnitt in der zweiten Wicklungsebene liegen. Beide Wicklungsebenen sind im Rahmen der Bauteiletoleranz daher parallel zueinander angeordnet.

Es ist aber auch möglich, die doppelte Kröpfung mit anderen Winkeln zu realisieren, ohne den Bereich der vorliegenden Erfindung zu verlassen. Beispielsweise könnte der erste Winkel -70 Grad und der zweite Winkel +70 Grad betragen, jeweils bezogen auf die Normale der ersten Wicklungsebene.

Bei einer vorteilhaften Weiterbildung der Spule weisen die beiden Wickelkopfabschnitte jeweils zwei Schenkel auf, die jeweils von den beiden Nutabschnitten weg in einer V-Form zulaufend ausgebildet sind. Ein Winkel der jeweiligen beiden Schenkel liegt dabei, bezogen auf die beiden Nutabschnitte, betragsmäßig zwischen 0 Grad und 90 Grad. Besonders bevorzugt weisen die Wickelkopfabschnitte in einem Bereich, in dem sich die beiden jeweiligen Schenkel gedacht schneiden, eine einfache Kröpfung mit einem Winkel von 180 Grad auf. Mit anderen Worten sind die beiden V-förmig zulaufenden Schenkel in dem Bereich der Spitze der V-Form halbkreisförmig gebogen, wobei einer der beiden Schenkel in der ersten Wicklungsebene liegt und der andere der beiden Schenkel in der zweiten Wicklungsebene liegt. Die halbkreisförmige Kröpfung erfolgt dabei in einer Ebene, die orthogonal zu den beiden Wicklungsebenen angeordnet ist.

Ohne Berücksichtigung von vorzugsweise einseitig vorgesehenen Spulenableitungen zum Anschluss der Spule, ist die Spule vorteilhafterweise spiegelsymmetrisch bezüglich wenigstens einer Mittelebene ausgebildet. Die (virtuelle) Mittelebene ist dabei orthogonal zu den beiden Wickelebenen angeordnet. Durch die Spiegelsymmetrie vereinfachen sich das Herstellungsverfahren und die Montage der Spule.

Die zuvor erwähnte Aufgabe wird auch durch ein Wicklungssystem für einen Ständer einer elektrischen Maschine gelöst, das als ein Einschichtwicklungssystem ausgebildet ist. Dabei weist das Wicklungssystem eine Mehrzahl an gleichartig ausgebildeten erfindungsgemäßen Spulen auf, die zu einem Anordnen in Nuten des Ständers ausgebildet und vorgesehen sind.

Die Lochzahl des Wicklungssystems beträgt dabei bevorzugt wenigstens zwei, besonders bevorzugt wenigstens drei.

Das Wicklungssystem kann bevorzugt in einem Ständer für eine elektrische Maschine verwendet werden. Dabei weist ein Ständerblechpaket des Ständers eine Mehrzahl an Nuten auf, in welchen jeweils ein Nutabschnitt einer Spule geführt ist (Einschichtwicklung).

Der Ständer kann besonders bevorzugt in Form einzelner Segmente ausgebildet sein, was den Transport und die Gesamtmontage des Ständers gerade bei verhältnismäßig großen Ausführungsvarianten, beispielsweise bei Windkraftgeneratoren, deutlich erleichtert. Durch die einfache Aufbautopologie des Wicklungssystems in Verbindung mit der Einschichtwicklung lässt sich eine Segmentierung des Wicklungssystems einfach bewerkstelligen, was auch hinsichtlich der Segmentierung des Ständers deutliche Vorteile mit sich bringt.

Der Ständer wird vorteilhafterweise in einer elektrischen Maschine, insbesondere einem Windkraftgenerator, eingesetzt.

Die eingangs beschrieben Aufgabe wird auch durch ein Verfahren zur Herstellung der erfindungsgemäßen Spule gelöst. Im Rahmen des Verfahrens wird zunächst eine Mehrzahl an Wickeldornen bereitgestellt, die zu einer Umwicklung mit einem Draht ausgebildet sind. Es kann sich dabei vorzugsweise um zwei, höchst vorzugsweise um vier und besonders bevorzugt um sechs Wickeldorne handeln. Um die gesamte Anordnung der Wickeldorne herum wird anschließend wiederholt ein Draht, insbesondere eine Kupferflachdraht, z.B. ein Flachdraht, gewickelt. Dadurch wird eine als Grundform der späteren Spule fungierende Schleifenform mit zwei Grundnutabschnitten und zwei Grundwickelkopfabschnitten erzeugt. Anschließend erfolgt ein Vorsehen wenigstens zweier zusätzlicher Wickeldorne, die an einer Außenseite der Schleifenform angeordnet werden.

Darauffolgend wird wenigstens ein Teil der Wickeldorne in sich teils voneinander unterscheidende Richtungen geradlinig geführt. Dadurch werden die Schleifenform umgeformt und insbesondere die beiden doppelten Kröpfungen erzeugt. Zuletzt wird die Endform der Spule in an sich bekannter Weise erzeugt, indem die Schleifenform auf einem Spulenzieher mit entsprechend angepassten Spulenführungswerkzeugen ausgezogen wird.

Bei einer vorteilhaften Ausbildung des erfindungsgemäßem Verfahrens werden die Wickeldorne und die durch das wiederholte Umwickeln der Wickeldorne mit dem Draht entstehende Schleifenform während des Herstellungsverfahrens der Spule auf einer ebenen, plattenförmigen Vorrichtung, insbesondere einem Tisch, angeordnet, um insbesondere bei der Erzeugung der beiden doppelten Kröpfungen eine seitliches Ausbrechen des gewickelten Drahtes zu verhindern.

Alternativ werden die Wickeldorne und die durch das wiederholte Umwickeln der Wickeldorne mit dem Draht entstehende Schleifenform während des Herstellungsverfahrens der Spule von einer ebenen, plattenförmigen Vorrichtung überdeckt, um insbesondere bei der Erzeugung der beiden doppelten Kröpfungen eine seitliches Ausbrechen des gewickelten Drahtes zu verhindern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: ein bisher bekanntes Wicklungssystem in einer perspektivischen Ansicht;
- Figur 2: ein erfindungsgemäßes Wicklungssystem mit erfindungsgemäßen Spulen in einer perspektivischen Ansicht;
- Figur 3: ein erfindungsgemäßes Wicklungssystem in einer perspektivischen Ansicht;
- Figur 4: ein erfindungsgemäßes Wicklungssystem gemäß Figur 3 mit einer Darstellung des Ständerblechpakets in einem perspektivischen Teilschnittbild;
- Figur 5: eine erfindungsgemäße Spule in einer perspektivischen Ansicht;
- Figur 6: einen ersten Verfahrensschritt eines erfindungsgemäßen Verfahrens gemäß einer ersten Variante;
- Figur 7: einen zweiten Verfahrensschritt eines erfindungsgemäßen Verfahrens gemäß einer ersten Variante;
- Figur 8: einen dritten Verfahrensschritt eines erfindungsgemäßen Verfahrens gemäß einer ersten Variante;
- Figur 9: einen ersten Verfahrensschritt eines erfindungsgemäßen Verfahrens gemäß einer zweiten Variante;
- Figur 10: einen zweiten Verfahrensschritt eines erfindungsgemäßen Verfahrens gemäß einer zweiten Variante; und
- Figur 11: einen dritten Verfahrensschritt eines erfindungsgemäßen Verfahrens gemäß einer zweiten Variante.

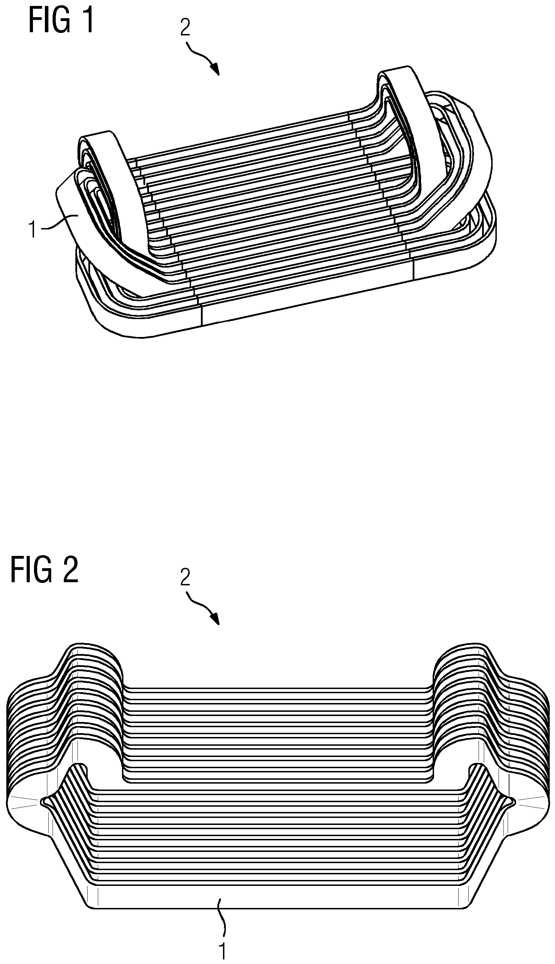

In Figur 1 ist ein aus dem Stand der Technik bekanntes Wicklungssystem 2 dargestellt. Das Wicklungssystem 2 ist als Einschichtwicklung ausgebildet und wird beispielsweise für einen Ständer (in Figur 1 nicht dargestellt) einer elektrischen Maschine verwendet. Es umfasst neun verschiedenartig ausgebildete Spulen 1 und ist für drei Stränge, d.h. drei (elektrische) Phasen, eines Polpaares vorgesehen und ausgebildet. Die Lochzahl ergibt sich dabei aus der Anzahl von Nuten im (nicht dargestellten) Ständer des Einschichtwicklungssystems je Pol und je Strang und beträgt bei dem in Figur 1 dargestellten Wicklungssystem 2 drei. Aus der Multiplikation von Lochzahl und Anzahl der Stränge ergibt sich die Anzahl von neun verschiedenartigen Spulen 1, die für das dargestellte Wicklungssystem 2 benötigt werden. Die hohe Anzahl an verschiedenartigen Spulen 1, die zur Realisierung des Wicklungssystems 2 benötigt werden, bringt einen erheblichen fertigungstechnischen Mehraufwand mit sich.

Figur 2 zeigt ein erfindungsgemäßes Wicklungssystem 2, welches ebenfalls als Einschichtwicklung ausgebildet ist. Es weist vergleichbar zu dem Wicklungssystem 2 aus Figur 1 die Lochzahl drei auf, umfasst neun Spulen 1 und ist für drei Stränge eines Polpaares eines Ständers einer elektrischen Maschine (Ständer und Maschine sind nicht dargestellt) vorgesehen und ausgebildet. Im Gegensatz zu dem bisher bekannten, in Figur 1 dargestellten Wicklungssystem 2 sind jedoch alle neun Spulen 1 gleichartig ausgebildet. Dadurch kann der fertigungstechnische Aufwand zur Realisierung des Wicklungssystems 2 gemäß Figur 2 im Vergleich zu den bisher bekannten Wicklungssystemen 2 deutlich reduziert werden. Insbesondere wird nur eine Art von Fertigungsmitteln und -vorrichtungen zur Herstellung des Wicklungssystems 2 gemäß Figur 2 benötigt. Die Fertigungsmittel bzw. -vorrichtungen müssen dabei nur ein einziges Mal eingerichtete werden, was zu einer deutlichen Zeit- und Materialersparnis führt.

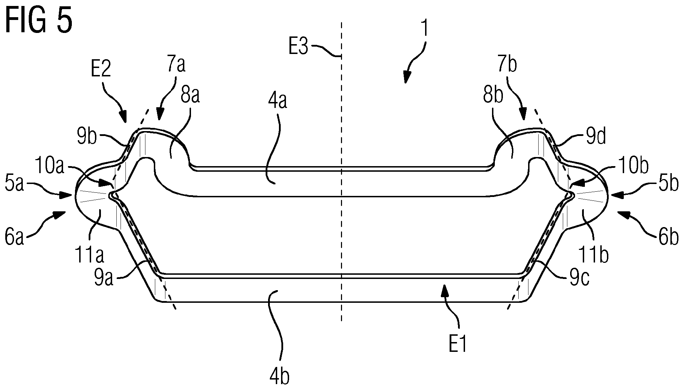

Die Lochzahl ist nicht auf drei oder kleiner beschränkt, sondern kann aufgrund der erheblich vereinfachten Fertigung nahezu beliebig hoch sein. Details zum Aufbau der Spulen 1 werden nachfolgend anhand der Figur 5 erläutert.

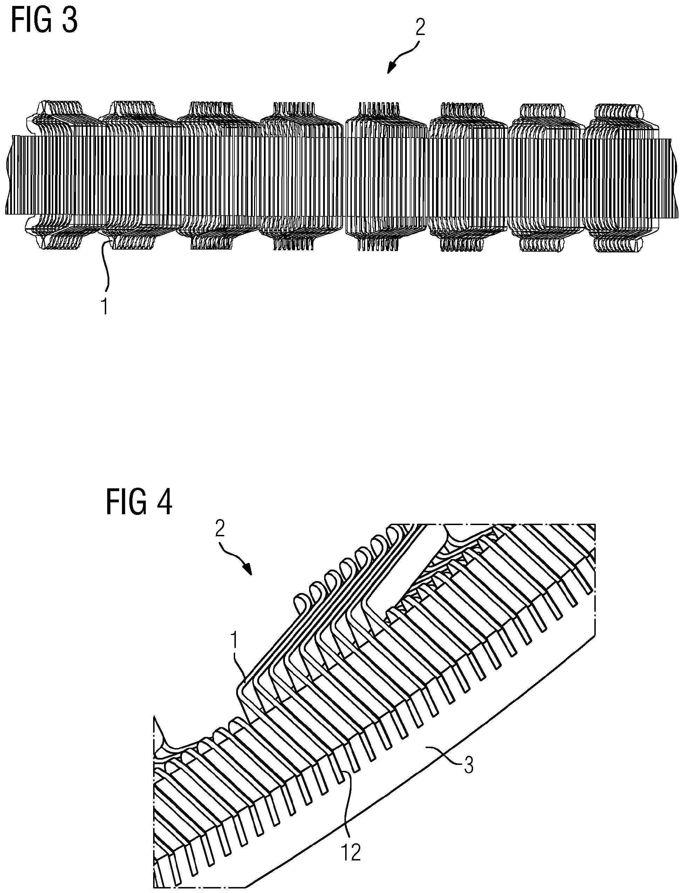

In den Figuren 3 und 4 ist jeweils ein Teilbereich eines Ständers mit einer elektrischen Maschine (die Maschine selbst ist aus Übersichtlichkeitsgründen nicht gezeigt) dargestellt, der ein erfindungsgemäßes Wicklungssystem 2 umfasst. Das Wicklungssystem 2 ist somit segmentierbar, was die Möglichkeit schafft, ein in Figur 4 gezeigtes Ständerblechpaket 3 des Ständers und weitere, nicht dargestellte Bauteile des Ständers 3 in gleicher Weise zu segmentieren, was aber für die Anwendung der Erfindung keine Voraussetzung ist.

Figur 3 zeigt eine Draufsicht auf das Wicklungssystem 2 nach Art einer Zentralperspektive. Dargestellt sind mehrere Polpaare, von denen vier komplett und zwei teilweise zu erkennen sind. Das Wicklungssystem 2 umfasst je Polpaar neun gleichartig ausgebildete Spulen 1 bei jeweils drei Strängen. Die Lochzahl beträgt wie in den Figuren 1 und 2 drei. Sie ist aber, wie zuvor anhand der Figur 2 erläutert, nicht auf Zahl drei oder kleiner beschränkt, sondern kann aufgrund der erheblich vereinfachten Fertigung nahezu beliebig hoch sein.

Die Spulen 2 greifen in an sich bekannter Weise in entsprechende, äquidistant in dem (in Figur 3 nicht dargestellten) Ständerblechpaket 3 angeordnete Nuten 12 ein, die in Figur 4 zu erkennen sind. Figur 4 zeigt dabei eine perspektivische Ansicht eines Längsschnitts durch das Ständerblechpaket 3. Gut zu erkennen ist, dass alle Spulen 1 gleichartig ausgebildet sind und bauraumoptimiert nebeneinander parallel angeordnet sind. In jede Nut 12 liegt nur eine einzige Nutseite einer Spule 1, was für Einschichtwicklungen charakteristisch ist. Weiterhin ist zu erkennen, dass die Spulen 1 im Wesentlichen in einer ersten Wicklungsebene E1 und einer zweiten Wicklungsebene E2 angeordnet sind, wobei die beiden Wicklungsebenen E1, E2 parallel zueinander ausgerichtet sind. Die beiden Wicklungsebenen E1, E2 sind auch in Figur 5 gut zu erkennen.

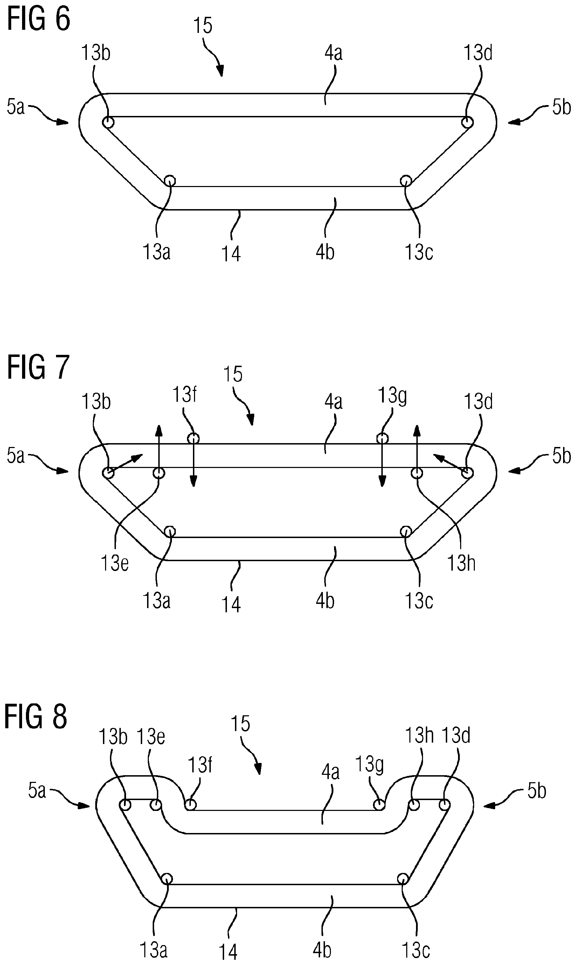

In Figur 5 ist eine erfindungsgemäße Spule 1 dargestellt, die im Rahmen eines erfindungsgemäßen Wicklungssystems 2, eines erfindungsgemäßen Ständers 3 und einer erfindungsgemäßen elektrischen Maschine verwendet werden kann. Die Spule 1 umfasst einen ersten quaderförmigen Nutabschnitt 4a und einen zweiten quaderförmigen Nutabschnitt 4b sowie einen ersten Wickelkopfabschnitt 5a und einen zweiten Wickelkopfabschnitt 5b. Die Spule 1 ist beispielsweise durch Aufwickeln und Ausziehen insbesondere eines Kupferdrahtes gefertigt worden, was anhand der Figuren 6-11 näher erläutert wird.

Der erste Nutabschnitt 4a und der zweite Nutabschnitt 4b sind voneinander beabstandet parallel zueinander angeordnet. Sie definieren die erste Wicklungsebene E1, in der beide Nutabschnitte 4a, 4b verlaufen. Die beiden Nutabschnitte 4a, 4b sind zu einem Eingreifen in Nuten 12 eines Ständers 3 ausgebildet. Der erste Nutabschnitt 4a und der zweite Nutabschnitt 4b sind an gegenüberliegenden Stirnseiten 6a, 6b der Spule 1 mittels des jeweiligen Wickelkopfabschnitts 5a, 5b miteinander verbunden.

In einem jeweiligen Übergangsbereich 7a, 7b zwischen dem ersten Nutabschnitt 4a und den beiden Wickelkopfabschnitten 5a, 5b weist die Spule 1 jeweils eine doppelte Kröpfung 8a, 8b. Ein erster der beiden Winkel der Kröpfung beträgt -90 Grad, der andere der beiden Winkel +90 Grad, jeweils bezogen auf eine Normale N (in Figur 5 nicht dargestellt) der ersten Wicklungsebene E1. Dadurch verläuft die Spule 1 vor dem jeweiligen Übergangsbereich 7a, 7b in der ersten Wicklungsebene 1 und nach dem jeweiligen Übergangsbereich 7a, 7b in einer zweiten Wicklungsebene E2, die von der ersten Wicklungsebene E1 beabstandet und parallel zu dieser angeordnet ist. Aufgrund der beiden unterschiedlichen Wicklungsebenen E1, E2 lassen sich mehrere Spulen 1 auf einfache Art und Weise nebeneinander anordnen, was in den Figuren 2 bis 4 gut zu erkennen ist.

In einem Bereich der beiden Wickelkopfabschnitte 5a, 5b weist die Spule 1 jeweils zwei Schenkel 9a, 9b, 9c, 9d auf (in Figur 5 durch gestrichelte Linien dargestellt), die von den beiden Nutabschnitten 4a, 4b weg nach Art einer V-Form aufeinander zulaufen. Dabei sind die beiden von dem ersten Nutabschnitt 4a weg verlaufenden Schenkel 9b, 9d in der zweiten Wicklungsebene E2, die beiden von dem zweiten Nutabschnitt 4b weg verlaufenden Schenkel 9b, 9d in der ersten Wicklungsebene E1 angeordnet. In einem Bereich 10a, 10b, in dem sich die beiden jeweiligen Schenkel 9a, 9b, 9c, 9d virtuell schneiden, weisen die beiden Wickelkopfabschnitte 5a, 5b der Spule 1 jeweils eine einfache Kröpfung 11a, 11b mit einem Winkel von 180 Grad auf. Durch diese Kröpfung wird der Übergang von der ersten Wicklungsebene E1 in die zweite Wicklungsebene E2 realisiert. Die spezielle V-Form der Schenkel 9a, 9b, 9c, 9d sowie die einfache Kröpfung 11a, 11b erleichtern die bauraumoptimierte Anordnung der Spulen 1 in einem Wicklungssystem 2.

Die in Figur 5 gezeigte Spule 1 ist, bei Vernachlässigung einer vorzugsweise einseitig befindlichen Spulenableitung, spiegelsymmetrisch bezüglich einer Mittelebene E3 ausgebildet. Die Mittelebene E3 ist dabei orthogonal zu den beiden Wicklungsebenen E1, E2 angeordnet und verläuft in Figur 5 (durch eine gestrichelte Linie angedeutet) aus der Zeichenebene heraus. Es liegt aber ebenso im Rahmen der Erfindung, wenn die Spule 1 keine Symmetrie aufweist.

In den Figuren 6-8 ist ein erfindungsgemäßes Verfahren zur Herstellung einer Spule 1 dargestellt. Wie in Figur 6 dargestellt, werden zunächst vier Wickeldorne 13a, 13b, 13c, 13d vorgesehen. Um diese vier Wickeldorne 13a, 13b, 13c, 13d herum wird ein Draht, insbesondere ein Kupferflachdraht, vielfach gewickelt. Dadurch entsteht eine als Grundform der späteren Spule 1 fungierende Schleifenform 15. Diese weist zwei Grundnutabschnitte 4a, 4b und zwei Grundwickelkopfabschnitte 5a, 5b auf.

Anschließend werden, wie in Figur 7 gezeigt, vier zusätzliche Wickeldorne 13e, 13f, 13g, 13h vorgesehen. Zwei der zusätzlichen Wickeldorne 13f, 13g werden an der Außenseite der Schleifenform 15 vorgesehen, die anderen beiden zusätzlichen Wickeldorne 13e, 13h an der Innenseite der Schleifenform 15. Die beiden äußeren Wickeldorne 13e, 13h werden geradlinig nach innen auf die Schleifenform 15 geführt, um diese nach innen zu formen. Die beiden inneren Wickeldorne 13e, 13g werden in der entgegengesetzten Richtung geradlinig nach außen bewegt, um die Schleifenform nach außen zu formen. Durch die gegenläufigen Formbewegungen der zusätzlichen Wickeldorne 13e, 13f, 13g, 13h wird die spätere doppelte Kröpfung 8a, 8b der Spule 1 erzeugt, was in Figur 8 bereits zu erkennen ist. Zwei der vier ursprünglichen Wickeldorne 13b, 13d werden zusätzlich nach außen bewegt, um die Erzeugung der doppelten Kröpfung 8a, 8b zu erleichtern.

Die Endform der Spule 1 wird schließlich durch Ausziehen der in Figur 8 gezeigten Schleifenform 15 auf einem Spulenzieher mit entsprechend angepassten Spulenführungswerkzeugen erzeugt.

Die Wickeldorne 13a, 13b, 13c, 13d, 13e, 13f, 13g, 13h und die durch das wiederholte Umwickeln der Wickeldorne 13a, 13b, 13c, 13d, 13e, 13f, 13g, 13h mit dem Draht 14 entstehende Schleifenform 15 kann während des Herstellungsverfahrens der Spule 1 auf einer ebenen, plattenförmigen Vorrichtung, insbesondere einem Tisch, angeordnet sein, um insbesondere bei der Erzeugung der beiden doppelten Kröpfungen 8a, 8b ein seitliches Ausbrechen des gewickelten Drahtes 14 zu verhindern.

Alternativ können die Wickeldorne 13a, 13b, 13c, 13d, 13e, 13f, 13g, 13h und die durch das wiederholte Umwickeln der Wickeldorne 13a, 13b, 13c, 13d, 13e, 13f, 13g, 13h mit dem Draht 14 entstehende Schleifenform 15 während des Herstellungsverfahrens der Spule 1 auch von einer ebenen, plattenförmigen Vorrichtung überdeckt sein, um ein seitliches Ausbrechen des gewickelten Drahtes 14 zu verhindern.

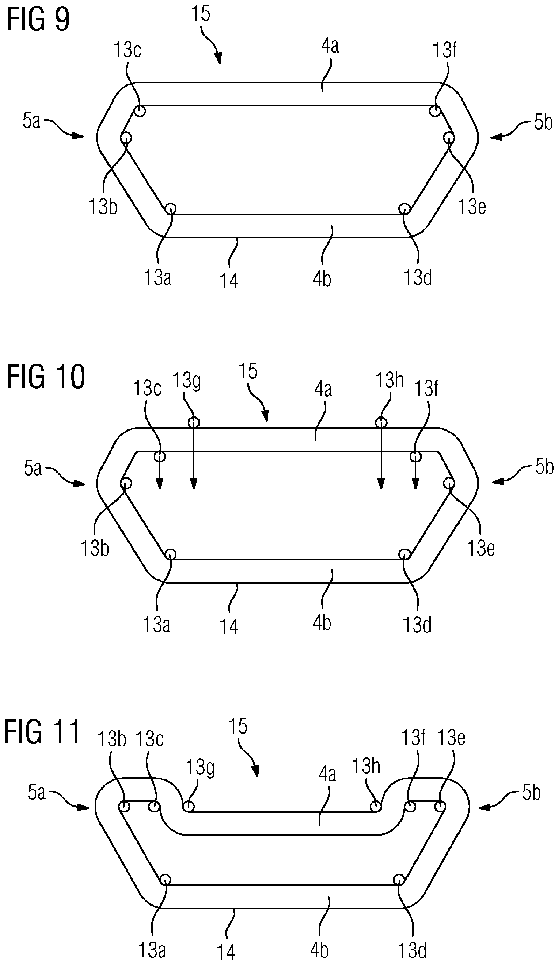

Die Figuren 9-11 zeigen eine zweite Variante des erfindungsgemäßen Verfahrens zur Herstellung der Spule 1. Zur Vermeidung von Wiederholungen wird nur auf die Unterschiede zu der ersten Variante (Figuren 6-8) eingegangen.

Im Gegensatz zu der ersten Variante werden sechs Wickeldorne 13a, 13b, 13c, 13d, 13e, 13f vorgesehen, um die der Draht 14 gewickelt wird. Anschließend werden nur zwei zusätzliche Wickeldorne 13g, 13h an der Außenseite der Schleifenform 15 vorgesehen (Figur 10). Die beiden zusätzlichen Wickeldorne 13g, 13h sowie zwei der ursprünglichen Wickeldorne 13c, 13f werden in einer geradlinigen Bewegung in das Innere der Schleifenform 15 bewegt, um insbesondere die doppelte Kröpfung 8a, 8b zu erzeugen (Figur 11).

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Spule (1) für ein Wicklungssystem (2) eines Ständers (3) einer elektrischen Maschine mit einem ersten Nutabschnitt (4a) und einem zweiten Nutabschnitt (4b), der vorzugsweise zu dem ersten Nutabschnitt (4b) parallel ausgerichtet ist, und zwei Wickelkopfabschnitten (5a, 5b), wobei der erste Nutabschnitt (4a) und der zweite Nutabschnitt (4b) an gegenüberliegenden Stirnseiten (6a, 6b) der jeweiligen Spule (1) mittels des jeweiligen Wickelkopfabschnitts (5a, 5b) miteinander verbunden sind, wobei die Spule (1) eine erste Wicklungsebene (E1) und eine zweite Wicklungsebene (E2) aufweist, die im Wesentlichen parallel zueinander angeordnet sind,
**dadurch gekennzeichnet, dass** die Spule (1) in einem jeweiligen Übergangsbereich (7a, 7b) zwischen dem ersten Nutabschnitt (4a) und den beiden Wickelkopfabschnitten (5a, 5b) jeweils eine doppelte Kröpfung (8a, 8b) aufweist.

2. Spule (1) nach Anspruch 1, bei der die beiden Nutabschnitte (4a, 4b) in der ersten Wicklungsebene (E1) liegen und die beiden Wickelkopfabschnitte (5a, 5b) wenigstens teilweise in der zweiten Wicklungsebene (E2) liegen.

3. Spule (1) nach Anspruch 2, bei der die beiden doppelten Kröpfungen (8a, 8b) der Spule (1) jeweils einen ersten Winkel von -90 Grad und einen zweiten Winkel von +90 Grad, bezogen auf eine Normale (N) der ersten Wicklungsebene (E1), aufweisen.

4. Spule (1) nach einem der vorangegangenen Ansprüche, bei der die beiden Wickelkopfabschnitte (5a, 5b) jeweils zwei Schenkel (9a, 9b, 9c, 9d) aufweisen, die jeweils von den beiden Nutabschnitten (4a, 4b) weg in V-Form zulaufend ausgebildet sind.

5. Spule (1) nach Anspruch 4, bei der die Wickelkopfabschnitte (5a, 5b) in einem Bereich (10a, 10b), in dem sich die beiden jeweiligen Schenkel (9a, 9b, 9c, 9d) virtuell schneiden, eine einfache Kröpfung (11a, 11b) mit einem Winkel von 180 Grad aufweisen, wobei einer der beiden jeweiligen Schenkel (9a, 9c) in der ersten Wicklungsebene (E1) und der andere der beiden jeweiligen Schenkel (9b, 9d) in der zweiten Wicklungsebene (E2) liegt.

6. Spule (1) nach einem der vorangegangenen Ansprüche, die ohne Berücksichtigung von Spulenableitungen spiegelsymmetrisch bezüglich wenigstens einer Mittelebene (E3) ausgebildet ist, wobei die Mittelebene (E3) orthogonal zu den beiden Wickelebenen (E1, E2) ausgerichtet ist.

7. Wicklungssystem (2) für einen Ständer (3) einer elektrischen Maschine, das als ein Einschichtwicklungssystem ausgebildet ist, mit einer Mehrzahl an gleichartig ausgebildeten Spulen (1) gemäß einem der Ansprüche 1 bis 6, die zu einem Anordnen in Nuten (12) des Ständers (3) ausgebildet und vorgesehen sind.

8. Wicklungssystem (2) nach Anspruch 7, das eine Lochzahl mit einem Betrag von wenigstens zwei, vorzugsweise wenigstens drei, aufweist.

9. Ständer für eine elektrische Maschine mit einem Wicklungssystem (2) gemäß einem der Ansprüche 7 oder 8, wobei ein Ständerblechpaket (3) des Ständers eine Mehrzahl an Nuten (12) aufweist, in welchen jeweils ein Nutabschnitt (4a, 4b) einer Spule (1) geführt ist.

10. Ständer nach Anspruch 9, der in Form einzelner Segmente ausgebildet ist.

11. Elektrische Maschine mit einem Ständer gemäß Anspruch 9 oder 10.

12. Verfahren zur Herstellung einer Spule (1) gemäß einem der Ansprüche 1 bis 6, umfassend:
a) Bereitstellen einer Mehrzahl an Dornen (13a, 13b, 13c, 13d, 13e, 13f), vorzugsweise zwei, höchst vorzugsweise vier, besonders bevorzugt sechs, die zu einer Umwicklung mit einem Draht (14) ausgebildet sind;
b) Wiederholtes Wickeln des Drahtes (14), insbesondere Kupferflachdrahtes, um die Wickeldorne (13a, 13b, 13c, 13d, 13e, 13f), um eine als Grundform der Spule (1) fungierende Schleifenform (15) mit zwei Grundnutabschnitten (4a', 4b') und zwei Grundwickelkopfabschnitten (5a', 5b') zu erzeugen;
c) Vorsehen wenigstens zweier zusätzlicher Wickeldorne (13g, 13h), die an einer Außenseite der Schleifenform (15) angeordnet werden;
d) Im Wesentlichen geradliniges Führen wenigstens eines Teils der Wickeldorne (13a, 13b, 13c, 13d, 13e, 13f, 13g, 13h), um die Schleifenform (15) umzuformen und insbesondere die beiden doppelten Kröpfungen (8a, 8b) zu erzeugen;
e) Erzeugen einer Endform der Spule (1) durch Ausziehen der Schleifenform (15) auf einem Spulenzieher mit entsprechend angepassten Spulenführungswerkzeugen.

13. Verfahren nach Anspruch 12, bei dem die Wickeldorne (13a, 13b, 13c, 13d, 13e, 13f, 13g, 13h) und die durch das wiederholte Umwickeln der Wickeldorne (13a, 13b, 13c, 13d, 13e, 13f, 13g, 13h) mit dem Draht (14) entstehende Schleifenform (15) während des Herstellungsverfahrens der Spule (1) auf einer ebenen, plattenförmigen Vorrichtung, insbesondere einem Tisch, angeordnet sind, um insbesondere bei der Erzeugung der beiden doppelten Kröpfungen (8a, 8b) eine seitliches Ausbrechen des gewickelten Drahtes (14) zu verhindern.

14. Verfahren nach Anspruch 12, bei dem die Wickeldorne (13a, 13b, 13c, 13d, 13e, 13f, 13g, 13h) und die durch das wiederholte Umwickeln der Wickeldorne (13a, 13b, 13c, 13d, 13e, 13f, 13g, 13h) mit dem Draht (14) entstehende Schleifenform (15) während des Herstellungsverfahrens der Spule (1) von einer ebenen, plattenförmigen Vorrichtung überdeckt sind, um insbesondere bei der Erzeugung der beiden doppelten Kröpfungen (8a, 8b) eine seitliches Ausbrechen des gewickelten Drahtes (14) zu verhindern.
